# FASCICULE DE BREVET EUROPEEN

(11) **EP 1 774 859 B1**
(45) Date de publication et mention de la délivrance du brevet: **21.04.2010**
(21) Numéro de dépôt: 06370030.6
(22) Date de dépôt: 03.10.2006
(51) Int. Cl.: A23L 3/20

(54) **Procédé de traitement, notamment de stérilisation et/ou de pasteurisation**
Behandlungsprozess, insbesondere zur Sterilisierung und/oder Pasteurisierung
Treatment process, especially for sterilization and/or pasteurization

(30) Priorité: 06.10.2005 FR 0510226
(43) Date de publication de la demande: 18.04.2007
(73) Titulaire: Bonduelle Société Anonyme, 59173 Renescure (FR)
(72) Inventeur: Maureaux, Alain, Bonduelle Société Anonyme, 59173 Renescure (FR); Albino, Lionel, Bonduelle Société Anonyme, 59173 Renescure (FR); Bocquet, Daniel, Bonduelle Société Anonyme, 59173 Renescure (FR); Houvenaghel, Céline, Bonduelle Société Anonyme, 59173 Renescure (FR)
(74) Mandataire: Duthoit, Michel Georges André

(56) Documents cités:
- WO-A-2004/082406
- US-A- 1 835 799
- US-A- 3 377 173
- US-A- 4 441 406
- US-A- 5 370 174
- US-A- 5 750 174
- US-A1- 2003 192 676
- US-A1- 2005 123 435

## Description

La présente invention concerne un procédé de traitement, notamment de stérilisation et/ou de pasteurisation, de produits alimentaires, ainsi qu'une installation conçue pour la mise en oeuvre du procédé.

Plus particulièrement, la présente invention concerne un procédé de traitement de produits alimentaires, conditionnés dans des emballages, notamment souples ou semi-rigides et/ou sensibles à l'humidité.

Actuellement, dans ce domaine de la stérilisation, on connaît des installations de traitement discontinu comprenant une seule enceinte dans laquelle est mené le traitement.

En particulier, les produits à traiter sont soumis à des médias thermiques, tels que l'eau par immersion, par ruissellement, ou la vapeur.

De tels types de procédés présentent divers inconvénients, notamment dus à la cadence discontinue qu'ils engendrent et à l'absence d'agitation pour des emballages.

C'est ainsi que des systèmes de traitement continu ont été imaginés pour pallier certains inconvénients des installations de traitement discontinu, et notamment pour obtenir une mise en régime thermique plus rapide, et pour supprimer les délais d'attente des produits avant traitement, ainsi que pour une meilleure maîtrise du processus de traitement thermique.

A ce sujet, on connaît des systèmes de traitement continu consistant dans un ensemble de convoyage des emballages traités par des médias thermiques, tels que cités ci-dessus, notamment l'eau par immersion, par ruissellement, ou la vapeur. De tels systèmes n'acceptent les emballages que rangés sur des claies de transport sans agitation.

Par ailleurs, le procédé en continu est aujourd'hui effectué dans des installations comprenant différentes enceintes successives, et des systèmes de sas permettent d'isoler un milieu de traitement d'un autre milieu aux conditions différentes.

Cela étant, les systèmes de traitement continu actuels sont mal adaptés au traitement de produits alimentaires conditionnés dans des emballages souples ou semi-rigides et/ou sensibles à l'humidité car, d'une part, les médias chauffants, voire refroidissants, tels que rappelés ci-dessus, ne peuvent pas être toujours utilisés, et d'autre part, les installations connues de traitement continu ne permettent pas de maîtriser la pression au niveau des zones de chauffage et/ou de refroidissement.

Le document US 2003/192676 décrit un procédé de traitement thermique d'un produit alimentaire emballé dans un emballage flexible. Les emballages sont transportés avec un système de convoyage, chauffés et puis refroidis par contact avec des gouttelettes d'eau chaude ou froid.

Le document US-A-5 370 174 décrit un procédé et une installation pour agiter et traiter thermiquement des produits alimentaires emballés dans des emballages flexibles. Les emballages sont transportés en continu et soumis à un traitement thermique (stérilisation) par contact avec des gouttelettes d'eau. Les emballages sont refroidis aussi par contact avec des gouttelettes d'eau.

Le document US-A-4 441 406 décrit un procédé et une installation pour pasteuriser des produits alimentaires emballés dans des emballages semi-rigides.

Le document US-A-5 750 174 décrit un procédé et une installation pour pasteuriser des produits alimentaires liquides emballés. Les emballages sont transportés en continu dans un tunnel qui comporte différentes zones (pre-chauffage, pre-pasteurisation, pasteurisation, refroidissement), le chauffage et le refroidissement étant fait par contact avec des gouttelettes d'eau.

Le but de la présente invention est de proposer un procédé de traitement, notamment de stérilisation et/ou de pasteurisation, en continu de produits alimentaires qui pallie les inconvénients précités, notamment au niveau du temps de traitement et de la maîtrise de la pression.

Le procédé de l'invention convient à tous types de produits alimentaires, et plus particulièrement aux produits alimentaires conditionnés dans des emballages souples ou semi-rigides et/ou sensibles à l'humidité, quelle que soit leur forme géométrique.

Un autre but de la présente invention est de proposer un procédé adapté aux sachets et/ou aux boîtes souples ou semi-rigides et/ou sensibles à l'humidité, quelle que soit leur structure et qui permet une meilleure maîtrise des régimes thermiques ainsi qu'une maîtrise des pressions.

Un des buts de la présente invention est de proposer un tel procédé adapté aux emballages à base de carton.

Un autre but de la présenté invention est de proposer une installation conçue pour la mise en oeuvre du procédé.

Un des buts de la présente invention est de proposer une installation qui permet de s'affranchir de la forme de l'emballage et de sa structure.

D'autres buts et avantages de l'invention apparaîtront au cours de la description qui va suivre, qui n'est donnée qu'à titre indicatif et qui n'a pas pour but de la limiter.

La présente invention concerne un procédé de traitement, notamment de stérilisation et/ou de pasteurisation de produits alimentaires conditionnés dans des emballages souples ou semi-rigides et/ou sensibles à l'humidité, pendant lequel les emballages sont chauffés puis refroidis .

Selon l'invention, lesdits emballages sont, directement ou indirectement, transportés en continu pendant les différentes phases de traitement à une pression donnée dans une seule enceinte confinée de traitement, ladite pression à l'intérieur de l'enceinte de traitement étant réglée supérieure ou égale à la pression à l'intérieur desdits emballages, et en ce que les emballages sont chauffés par contact avec des microgouttelettes, de diamètre de l'ordre de 50 à 200 µm, d'eau chaude dans un flux d'air et/ou de vapeur pulsée.

Un tel système chauffant permet de réduire l'accumulation d'eau sur la surface des emballages traités, et par suite l'absorption de l'eau par l'emballage, tout en assurant un échauffement rapide des produits contenus dans les emballages.

L'invention concerne également une installation de traitement, notamment de stérilisation et/ou de pasteurisation de produits alimentaires conditionnés dans des emballages souples ou semi-rigides et/ou sensibles à l'humidité conçus pour la mise en oeuvre du procédé précité, caractérisée en ce qu'elle est constituée d'une enceinte comprenant des moyens pour créer un flux d'air et de vapeur pulsée assurant la formation et le transport de microgrouttelettes de diamètre de l'ordre de 50 à 200 µm afin de chauffer les emballages, des moyens pour contrôleur la pression à l'intérieur de ladite enceinte et des moyens pour soumettre lesdits produits à un chauffage et à un prérefroidissement en surpression, c'est-à-dire à une pression à l'intérieur de l'enceinte de 30 à 120 MPa (300 à 1.200 mbars) supérieure à la pression de la vapeur.

L'invention sera mieux comprise à la lecture de la description suivante accompagnée de dessins en annexe parmi lesquels :
- la figure 1 représente une vue schématique d'un exemple de mode de réalisation de l'installation conçue pour la mise en oeuvre du procédé de l'invention.
- les figures 2a, 2b et 2c représentent schématiquement divers modes de réalisation de conteneurs pour le transport des emballages selon la présente invention.

La présente invention concerne, tout d'abord, un procédé de traitement, notamment de stérilisation et/ou de pasteurisation, de produits alimentaires conditionnés dans des emballages souples ou semi-rigides 1, pendant lequel des emballages sont chauffés 3 puis refroidis 4.

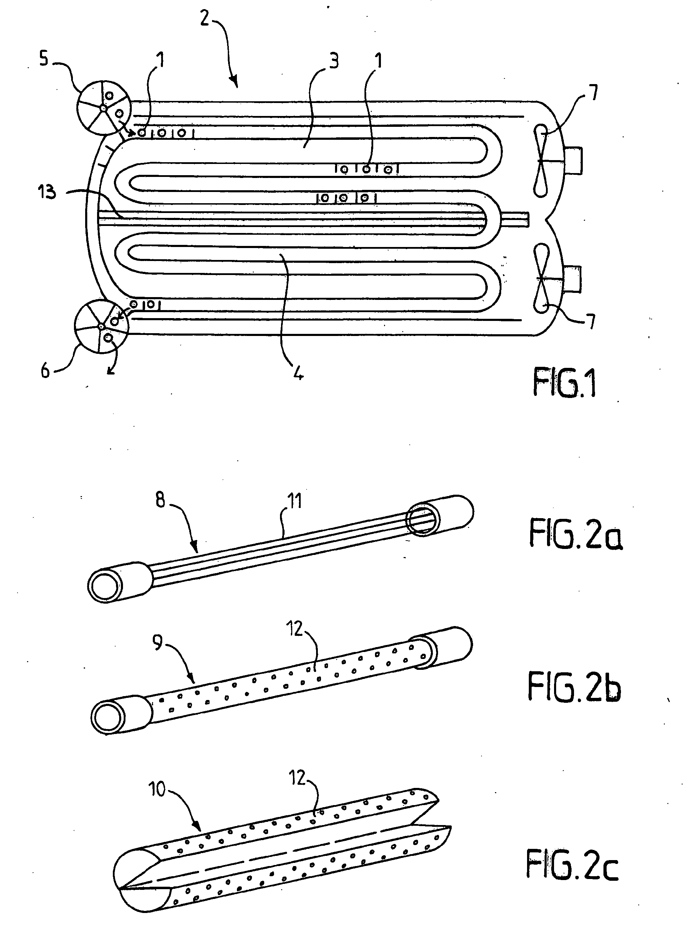

Selon l'invention, tels qu'illustrés aux figures 1 et 2, lors du procédé de traitement des produits alimentaires, lesdits emballages sont, directement ou indirectement, transportés en continu pendant les différentes phases 3, 4 de traitement à une pression donnée dans une seule enceinte confinée de traitement. En outre, les emballages 1 sont chauffés par contact avec des micro-gouttelettes d'eau chaude dans un flux d'air et de vapeur pulsé.

Le flux d'air et/ou de vapeur pulsé permet le transport desdites micro-gouttelettes qui vont rester en contact avec l'emballage le temps d'un échange thermique, mais qui ensuite vont être évacuées par le courant d'air créé, pour éviter leur absorption par l'emballage.

A titre d'exemple, non limitatif, on a obtenu de bons résultats avec des produits alimentaires conditionnés dans des emballages souples ou semi-rigides de type plastique, ou de type complexe aluminium - plastique - carton, tels que les emballages connus sous les appellations ou marques Tétra Pack ou Combi-bloc.

Par ailleurs, le traitement de produits alimentaires se fait sans délaminage de l'emballage au cours du process.

Le procédé de l'invention permet un traitement de produits alimentaires par chauffage et refroidissement à une pression donnée, différente de celle de la pression atmosphérique et, donc, à une pression maîtrisée.

En outre, et tel que déjà mentionné précédemment, les différentes phases de stérilisation, à savoir une phase de chauffage 3 et une phase de prérefroidissement 4, se situent dans la même enceinte 2.

Afin de comparer les différences entre une stérilisation discontinue des petits pois conditionnés dans des emballages souples et le procédé continu selon la présente invention, une étude sur les temps de séjour dans le stérilisateur a été menée.

Les résultats obtenus sont décrits dans le tableau ci-dessous :

| Type de stérilisateur | Temps de séjour total en minutes | Durée de mise en régime en minutes | Palier de stérilisation en minutes | Pré-refroidissement sous pression en minutes | Refroidissement atmosphé rique en minutes | Température finale du produit dans l'emballage | Vc finale en min | Vs finale en min |
|---|---|---|---|---|---|---|---|---|
| Continu | 25 | 0,5 | 14 | 2 | 8 | 30°C | 85 | 40 |
| Discontinu | 43 | 6 | 14 | 23 | Néant | 33°C | 80 | 33 |

Par valeur stérilisatrice « Vs », on entend le temps en minutes d'un traitement appliqué au coeur du produit, notamment lors d'un traitement sous pression à une température de 121,1 °C, afin d'obtenir la stérilisation souhaitée.

De même, une valeur cuisatrice « Vc » peut être définie. Elle permet de quantifier l'effet de traitement sur la qualité du produit à une température de 100 °C.

Afin de comparer plus précisément les deux systèmes de stérilisation, pour une valeur stérilisatrice de 33, on obtiendrait un temps de cycle total de 35 min avec le stérilisateur continu, soit un gain de 8 min (23 %) en faveur du procédé continu.

Encore à titre d'exemple non limitatif, la même étude a été effectuée pour les haricots en sauce tomate. Les résultats se trouvent au tableau ci-dessous :

| Type de stérilisateur | Temps de séjour total en heures | Durée de mise en régime | Palier de stérilisation en minutes | Pré-refroidissement sous pression en minutes | Refroidissement atmosphé rique en minutes | Température finale du produit dans l'emballage | Vc finale en min | Vs finale en min |
|---|---|---|---|---|---|---|---|---|
| Continu | 1 | 1 | 28 | 17 | 12 | 33°C | 150 | 40 |
| Discontinu | 1,30 | 6 | 60 | 24 | Néant | 33°C | 140 | 80 |

Tel que montré dans ce tableau, pour une valeur stérilisatrice « Vs » de 80, on obtient un temps de cycle total de 60 min pour le stérilisateur continu, contre 90 min pour le stérilisateur discontinu, soit un gain de 30 min (33 %) en faveur du procédé continu.

Selon le procédé de la présente invention, la phase de stérilisation est immédiate, c'est-à-dire que le délai de mise en régime est nul et que l'on passe directement de la température ambiante et pression atmosphérique à une température et pression de stérilisation.

En outre, pendant les phases de traitement, selon la présente invention, la pression à l'intérieur de l'enceinte 2 de traitement est réglée telle qu'elle soit supérieure ou égale à la pression à l'intérieur desdits emballages 1, par exemple à une valeur supérieure de 30 à 120 MPa (0,3 à 1,2 bar) à la pression interne.

La surpression présente l'avantage d'éviter l'explosion des emballages lors du chauffage des produits alimentaires conditionnés dans lesdits emballages. En effet, lors du chauffage, la pression à l'intérieur desdits emballages augmente et, parce que les emballages sont souples ou semi-rigides, il y a un risque d'éclatement de l'emballage ou de déformation irréversible.

Encore selon la présente invention, lesdits emballages 1 sont soumis en outre à une agitation pendant lesdites phases 3, 4 de traitement. Ils peuvent être soumis à une agitation en continu, ou alternativement ou discontinu, ou séquentiellement.

Par exemple, on peut soumettre les emballages à une rotation continue entre 2 et 20 tours/minute.

Des études ont été menées afin d'étudier l'effet de la rotation des emballages sur le temps de stérilisation.

Ces études ont montré que, les rotations des emballages ont pour conséquence d'homogénéiser la température au sein de l'emballage, et d'augmenter la valeur stérilisatrice obtenue, comme le montrent les résultats suivants pour les petits pois :

| Mode de stérilisation | Temps total du cycle en minutes | Durée du palier de stérilisation en minutes | Durée du pré-refroidissement sous pression en minutes | Vs |
|---|---|---|---|---|
| Statique | 35 | 14 | 12 | 33 |
| Avec rotation | 37 | 18 | 10 | 80 |

Selon un mode particulier de la présente invention, lesdits emballages sont chauffés par lesdites micro-gouttelettes d'eau, de l'ordre de 50 à 200 µm de diamètre, à une température entre 120 et 130°C. Il est impératif, tel qu'évoqué précédemment, que le chauffage des emballages soit effectué par des micro-gouttelettes d'eau, dans un flux d'air et/ou de vapeur pulsé et non pas par immersion dans de l'eau, afin d'éviter la détérioration desdits emballages car ils absorberaient alors énormément d'eau et se délamineraient.

En outre, et selon la présente invention, lesdits emballages seront pré refroidis par contact avec des micro-gouttelettes d'eau froide, dans un flux d'air pulsé dans ladite enceinte 2.

Le prérefroidissement est bien entendu également une phase délicate. L'immersion dans de l'eau est à proscrire car les emballages souples ou semi-rigides et/ou sensibles à l'humidité supporteraient très mal un tel traitement. Les essais avec une phase d'immersion donnent des emballages tellement délaminés qu'ils sont détruits.

Le débit, la pression mais surtout le diamètre des gouttelettes sont primordiaux. Lorsqu'une pluie de micro-gouttelettes très fines, de l'ordre de 50 à 200 µm de diamètre, tombe sur des emballages, ils sortent en excellent état du stérilisateur.

A titre d'exemple non limitatif, on a obtenu de bons résultats pour un débit allant de 1,6 à 2 *m³*/*hr m².* La durée du prérefroidissement sous pression est d'environ 15 min notamment pour le cas des petits pois, la température de l'eau étant à 18 °C. La température maximale de sortie de pré-refroidissement sous pression à respecter se situe entre 65 et 70 °C. Au-delà de cette température, l'emballage se déforme beaucoup trop du fait de la surpression existant à l'intérieur.

La maîtrise de la température et de la pression dans l'enceinte 1 de traitement peut être assurée par tout moyen conventionnel connu.

En outre, les transferts de chaleur peuvent être assurés par tous les fluides appropriés, en particulier par de l'eau pressurisée à une température supérieure à 100 °C sous forme de micro-gouttelettes, de diamètre moyen de 50 à 200 µm, transportées par de l'air véhiculé à des vitesses, non inférieures à 0,5 m/s, de l'ordre notamment de 2 m/s ou plus. Cette vitesse permet d'obtenir une performance d'échange caractérisée par des coefficients globaux de transfert de 150 à 1000 W.m⁻².k⁻¹, sans stagnation intempestive à la surface de l'emballage.

En effet, les vitesses de circulation des fluides, telles que proposées par la présente invention, permettent l'élimination rapide de toute accumulation d'eau sur les parties soumises aux échanges thermiques, tout en assurant une homogénéité dans l'enceinte 2 de traitement.

En outre, une phase de refroidissement par aspersion des emballages 1 à pression atmosphérique, au moins jusqu'à une température inférieure à 65 °C peut suivre la phase de prérefroidissement.

Pour le refroidissement à pression atmosphérique, on a obtenu de bons résultats avec un débit de 2 *m³*/*hr m².* Une ventilation énergique y est maintenue et il serait certainement possible d'augmenter le débit d'eau pendant cette phase afin de refroidir plus vite, tout en conservant l'intégrité de l'emballage.

Selon la présente invention, la pression à l'intérieur de l'enceinte 2 est, par exemple, de 30 à 120 MPa (300 à 1.200 mbars) supérieure à la pression de la vapeur, aussi bien dans la phase de stérilisation 3 que dans la phase de prérefroidissement 4.

La présente invention concerne également une installation, représentée schématiquement à la figure 1 selon un mode de réalisation non limitatif, pour la mise en oeuvre du procédé de traitement décrit ci-dessus.

Ladite installation est constituée d'une seule enceinte 2 comprenant des moyens pour contrôler la pression à l'intérieur de ladite enceinte 2 et des moyens pour soumettre lesdits produits à un chauffage, puis à un prérefroidissement en surpression.

Par « seule enceinte », il faut comprendre que les emballages, remplis de produits alimentaires à traiter, sont disposés dans une seule et même enceinte à l'intérieur de laquelle les produits seront chauffés puis prérefroidis.

Ainsi, ladite installation présente notamment deux zones, une zone de chauffage 3 et une zone de prérefroidissement 4.

Par ailleurs, ladite installation comprend en outre un sas d'entrée 5 et un sas de sortie 6 pour lesdits produits à traiter, et les deux dites zones 3, 4 sont séparées par un plancher 13, telle qu'une cloison rigide, notamment horizontale, présentant des passages nécessaires au système de convoyage continu des emballages. Les sas 5 et 6 peuvent être de tous types séparant des milieux gazeux ou des milieux liquides intermédiaires (eau).

Les emballages 1 sont transférés, après passage dans ledit sas à l'eau 5, dans une zone de stérilisation saturée en micro-gouttelettes d'eau à 130 °C par exemple et avec une surpression minimale de 50 MPa (500 mbars).

Lesdites micro-gouttelettes sont formées et transportées par un flux d'air et/ou de vapeur pulsé généré par exemple à l'aide de buses, non représentées ou de tout autre système adapté.

L'enceinte 2 de stérilisation comprend en outre des moyens de brassage permettant un brassage énergique pour une meilleure homogénéité de température et une amélioration des transferts thermiques. Les moyens de brassage sont constitués au moins d'une turbine 6, 7.

En outre, et selon la présente invention, l'installation comprend des moyens pour, directement ou indirectement, transporter lesdits emballages et les soumettre à une rotation sur eux-mêmes, tels que montrés aux figures 2, par exemple de 2 à 20 tours/minute, en continu, en discontinu, ou selon un régime alternatif.

Les moyens pour transporter lesdits emballages et les soumettre à une rotation sur eux-mêmes peuvent être constitués d'une chaîne de transport sans fin à laquelle lesdits emballages 1 sont assujettis directement ou par l'intermédiaire de conteneurs 8, 9, 10 permettant ou non le contact entre les emballages 1 et le milieu environnant.

Les figures 2 représentent, à titre non limitatif, trois types de conteneurs 8, 9, 10 pour le transport desdits emballages 1. Ces types de conteneurs 8, 9, 10 peuvent être constitués par des barres 11 de maintien adaptées aux emballages 1 ou d'un tube perforé 12, ce qui permet d'entourer et de maintenir les emballages au contact direct avec le milieu environnant le cas échéant.

Les moyens pour transporter lesdits emballages, aussi appelés système de convoyage sont donc assimilables à un conteneur rigide apte à contenir et transporter les emballages 1 à traiter. Sa forme géométrique est peu importante pourvu qu'elle soit adaptée à une éventuelle mise en agitation.

Les conteneurs 8, 9 10 peuvent être des tubes ouverts aux extrémités pour permettre le déchargement et le chargement des emballages 1. Ils pourront être rendus ou non solidaires du système qui les entraîne ou les transporte, et qui éventuellement provoque leur agitation.

En outre, les conteneurs 8, 9, 10 peuvent être de type individuel, un emballage 1 pour conteneur, ou de type regroupement, plusieurs emballages 1 par conteneur.

La rotation par roulement ou provoquée par entraînement est un mode d'agitation possible mais non limitatif de ces conteneurs. Il est en particulier possible de prévoir sur les conteneurs 8, 9, 10 des parties cylindriques lisses ou crantées nécessaires à la mise en rotation desdits emballages. Il peut s'agir notamment de rails, aimants, crémaillères, etc, capables de provoquer si besoin la mise en rotation continue ou alternative ou séquentielle des emballages traités.

L'installation selon la présente invention permet le chargement et le déchargement continu des emballages traités, ceci selon un transfert frontal ou transversal en fonction du type de conteneur, tel qu'illustré aux figures 2a, 2b et 2c, avec une cadence de 20 à 50 unités par minute pour des emballages de 3 à 5 kg, de 400 à 600 unités par minute pour des emballages inférieurs à 1 kg.

Naturellement, d'autres modes de mise en oeuvre, à la portée de l'homme de l'art, auraient pu être envisagés sans pour autant sortir du cadre de l'invention.

## Revendications

1. Procédé de traitement, notamment de stérilisation et/ou de pasteurisation, de produits alimentaires conditionnés dans des emballages (1) souples ou semi-rigides et/ou sensibles à l'humidité; pendant lequel les emballages sont chauffés (3) puis refroidis (4) **caractérisé en ce que** lesdits emballages sont, directement ou indirectement, transportés en continu pendant les différentes phases (3, 4) de traitement à une pression donnée dans une seule enceinte (2) confinée de traitement, ladite pression à l'intérieur de l'enceinte (2) de traitement étant réglée supérieure ou égale à la pression à l'intérieur desdits emballages (1), et **en ce que** les emballages sont chauffés par contact avec des microgouttelettes d'eau chaude, de diamètre de l'ordre de 50 à 200 µm, dans un flux d'air et/ou de vapeur pulsée.

2. Procédé selon la revendication 1, dans lequel lesdits emballages (1) sont soumis en outre à une agitation pendant lesdites phases de traitement (3, 4), ou continu, ou discontinu, ou alternative ou séquentiellement.

3. Procédé selon la revendication 1 ou 2, dans lequel la pression à l'intérieur de l'enceinte (2) est de 30 à 120 MPa (300 à 1.200 mbars) supérieure à la pression de la vapeur.

4. Procédé selon l'une des revendications 1 à 3, dans lequel lesdits emballages (1) sont chauffés par lesdites microgouttelettes d'eau à une température entre 120 et 130 °C.

5. Procédé selon l'une des revendications 1 à 4, dans lequel ledit flux d'air forcé présente une vitesse, non inférieure à 0,5 m/s, de l'ordre de 2 m/s ou plus.

6. Procédé selon l'une des revendications 1 à 5, dans lequel lesdits emballages (1) sont en outre prérefroidis par contact avec des microgouttelettes d'eau froide, dans un flux d'air puisé, dans ladite enceinte (2).

7. Procédé selon l'une des revendications 1 à 6, dans lequel lesdits emballages (1) sont, en outre, refroidis par aspersion à pression atmosphérique.

8. Installation de traitement, notamment de stérilisation et/ou de pasteurisation, de produits alimentaires conditionnés dans des emballages souples ou semi-rigides et/ou sensibles à l'humidité conçus pour la mise en oeuvre du procédé selon la revendication 1, **caractérisée en ce qu'**elle est constituée d'une enceinte (2) comprenant des moyens pour créer un flux d'air et de vapeur pulsée assurant la formation et le transport de microgouttelettes de diamètre de l'ordre de 50 à 200 µm afin de chauffer les emballages, ainsi que des moyens pour contrôler la pression à l'intérieur de ladite enceinte (2) et des moyens pour soumettre lesdits produits à un chauffage et à un prérefroidissement en surpression, c'est-à-dire à une pression à l'intérieur de l'enceinte de 30 à 120 MPa (300 à 1.200 mbars) supérieure à la pression de la vapeur.

9. Installation selon la revendication 8, en ce que ladite enceinte est constituée de deux zones, une zone de chauffement (3) et une zone de prérefroidissement (4), séparées par une cloison.

10. Installation selon la revendication 8 ou 9, comprenant des moyens de brassage.

11. Installation selon la revendication 10, dans laquelle les moyens de brassage sont constitués au moins d'une turbine.

12. Installation selon l'une des revendications 8 à 11, comprenant des moyens pour, directement ou indirectement, transporter lesdits emballages (1) et les soumettre à une rotation sur eux-mêmes de 2 à 20 tours/minute en continu, en discontinu, ou selon un régime alternatif.

13. Installation selon la revendication 12, dans laquelle lesdits moyens pour transporter lesdits emballages se présentent sous la forme d'un conteneur (8, 9, 10) permettant ou non le contact entre les emballages (1) et le milieu environnant.

## Claims

1. A method for processing, in particular sterilising and/or pasteurising, food products packaged in flexible or semi-rigid and/or humidity sensitive wrappings (1), during which the wrappings are heated (3) then cooled down (4), **characterised in that** said wrappings are, directly or indirectly, transported continuously during the different phases (3, 4) processing at a given pressure in a single, enclosed processing cabinet (2), said pressure inside the processing cabinet (2) being adjusted greater than or equal to the pressure inside said wrappings (1), and **in that** the wrappings are heated by contact with hot water microdroplets, of the order of 50 to 200 µm in diameter, in an air flow and/or a pulsed steam flow.

2. A method according to claim 1, wherein said wrappings (1) are subjected moreover to agitation during said processing phases (3, 4), continuously, discontinuously, alternately or in sequence.

3. A method according to claim 1 or 2, wherein the pressure inside the cabinet (2) is 30 to 120 MPa (300 to 1200 mbars) greater than the steam pressure.

4. A method according to one of the claims I to 3, wherein said wrappings (1) are heated by said water microdroplets at a temperature between 120 and 130°C.

5. A method according to one of the claims 1 to 4, wherein the speed of said forced air flow exhibits is not smaller than 0.5 m/s, of the order of 2 m/s or above.

6. A method according to one of the claims 1 to 5, wherein said wrappings (1) are moreover pre-cooled down by contact with cold water microdroplets, in a pulsed air flow, in said cabinet (2).

7. A method according to one of the claims 1 to 6, wherein said wrappings (1) are, moreover, cooled down by spraying at atmospheric pressure.

8. An installation for processing, in particular sterilising and/or pasteurising, food products packaged in flexible or semi-rigid and/or humidity sensitive wrappings designed for implementing the method according to claim 1, **characterised in that** it is formed of a cabinet (2) comprising means to create an air flow and a pulsed steam flow for generating and transporting microdroplets of the order of 50 to 200 µm in diameter so as to heat the wrappings, as well as means for controlling the pressure inside said cabinet (2) and means for subjecting said products to heating and to superpressure precooling, that is to say to a pressure inside the cabinet which lies 30 to 120 MPa (300 to 1.200 mbars) above the steam pressure.

9. An installation according to claim 8, **characterised in that** said cabinet is formed of two zones, a heating zone (3) and a precooling zone (4), separated by a partition.

10. An installation according to claim 8 or 9, comprising brewing means.

11. An installation according to claim 10, wherein the brewing means consist at least of one turbine.

12. An installation according to one of the claims 8 to 11, comprising means for, directly or indirectly, transporting said wrappings (1) and subjecting them to a rotation around themselves by 2 to 20 rpm continuously, discontinuously or with an alternating duty.

13. An installation according to claim 12, wherein said means for transporting said wrappings are in the form of a container (8, 9, 10) enabling contact or not between the wrappings (1) and the surrounding medium.

## Patentansprüche

1. Verfahren zur Behandlung, nämlich Sterilisierung und/oder Pasteurisierung, von in weichen oder halbweichen und/oder nässeempfindlichen Verpackungen (1) verpackten Nahrungsmitteln, während dem die Verpackungen erhitzt (3), anschliessend gekühlt (4) werden, **dadurch gekennzeichnet, dass** die besagten Verpackungen während der verschiedenen Behandlungsphasen (3, 4) bei einem gegebenen Druck direkt oder indirekt kontinuierlich in einer einzigen geschlossenen Behandlungskammer (2) befördert werden, wobei der besagte Druck innerhalb der Behandlungskammer (2) höher als oder gleich dem Druck innerhalb der besagten Verpackungen (1) eingestellt wird, und dass die Verpackungen durch Berührung mit Heißwasser-Mikrotröpfchen mit einem Durchmesser der Größenordnung von 50 bis 200 µm in einem Luft- und/oder gepulsten Dampfstrom erhitzt werden.

2. Verfahren nach Anspruch 1, bei dem die besagten Verpackungen (1) während der besagten Behandlungsphasen (3, 4) außerdem entweder kontinuierlich oder diskontinuierlich oder abwechselnd oder sequenziell einem Rühren ausgesetzt werden.

3. Verfahren nach Anspruch 1 oder 2, bei dem der Druck innerhalb der Kammer (2) 30 bis 120 mPa (300 bis 1200 mBar) höher ist als der Druck des Dampfes.

4. Verfahren nach einem der Ansprüche 1 bis 3, bei dem die besagten Verpackungen (1) durch die besagten Mikrowassertröpfchen auf eine Temperatur zwischen 120 und 130 °C erhitzt werden.

5. Verfahren nach einem der Ansprüche 1 bis 4, bei dem der besagte gezwungene Luftstrom eine Geschwindigkeit, nicht geringer als 0,5 m/3, der Größenordnung von 2 m/s oder mehr aufweist.

6. Verfahren nach einem der Ansprüche 1 bis 5, bei dem die besagten Verpackungen (1) außerdem durch Berührung mit Kaltwasser-Mikrotröpfchen in einem gepulsten Luftstrom in der besagten Kammer (2) vorgekühlt werden.

7. Verfahren nach einem der Ansprüche 1 bis 6, bei dem die besagten Verpackungen (1) außerdem durch Besprühung bei Raumdruck gekühlt werden.

8. Anlage zur Behandlung, nämlich Sterilisierung und/oder Pasteurisierung, von in weichen oder halbweichen und/oder nässeempfindlichen Verpackungen (1) verpackten Nahrungsmitteln, vorgesehen, um das Verfahren nach Anspruch 1 durchzuführen, **dadurch gekennzeichnet, dass** sie aus einer Kammer (2) besteht, die Mittel, um einen Luft- und/oder gepulsten Dampfstrom zu bilden, der die Bildung und Beförderung von Mikrotröpfchen mit einem Durchmesser der Größenordnung von 50 bis 200 µm zu sichern, um die Verpackungen zu erhitzen, sowie Mittel zur Steuerung des Drucks der besagten Kammer (2) und Mittel, um die besagten Produkte einer Erhitzung und einer Vorkühlung bei Überdruck, d.h. bei einem Druck innerhalb der Kammer (2), der 30 bis 120 mPa (300 bis 1200 mBar) höher als der Druck des Dampfes ist, auszusetzen, umfasst.

9. Anlage nach Anspruch 8, **dadurch gekennzeichnet, dass** die besagte Kammer aus zwei Bereichen, einem Heizungsbereich (3) und einem Vorkühlungsbereich (4), die durch eine Trennwand von einander getrennt sind, besteht.

10. Anlage nach Anspruch 8 oder 9, umfassend Rührmittel.

11. Anlage nach Anspruch 10, bei der die Rührmittel aus wenigstens einer Turbine bestehen.

12. Verfahren nach einem der Ansprüche 8 bis 11, umfassend Mittel, um die besagten Verpackungen (1) direkt oder indirekt zu befördern und diese kontinuierlich, diskontinuierlich oder in Wechselbetrieb einer Drehung auf sich selbst bei 2 bis 20 Umdrehungen/Minute auszusetzen.

13. Anlage nach Anspruch 12, bei der die besagten Mittel zum Befördern der besagten Verpackungen als ein Behälter (8, 9, 10) ausgestaltet sind, der die Berührung zwischen den Verpackungen (1) und der Umgebung ermöglicht oder nicht.
